# EUROPEAN PATENT SPECIFICATION

(11) **EP 2 103 843 B1**
(45) Date of publication and mention of the grant of the patent: **23.02.2011**
(21) Application number: 07850772.0
(22) Date of filing: 18.12.2007
(51) Int. Cl.: F16H 1/16, F16D 3/68, F16H 55/22, H02K 7/116

(54) **MOTOR WITH REDUCTION GEAR**
MOTOR MIT UNTERSETZUNGSGETRIEBE
MOTEUR AVEC ENGRENAGE DE REDUCTION

(30) Priority: 22.12.2006 JP 2006345654
(43) Date of publication of application: 23.09.2009
(73) Proprietor: Mabuchi Motor Co., Ltd., Matsudo-shi, Chiba 270-2280 (JP)
(72) Inventor: SAYA, Tsutomu, Matsudo-shi Chiba 270-2280 (JP)
(74) Representative: 2K Patentanwälte Blasberg Kewitz & Reichel
(86) International application number: PCT/JP2007/074284
(87) International publication number: WO 2008/078600

(56) References cited:
- EP-A- 0 619 445
- JP-A- 9 155 920
- JP-A- 10 271 752
- JP-A- 2001 037 156
- JP-A- 2001 271 846
- JP-A- 2002 139 122
- JP-A- 2003 013 989
- JP-U- 06 078 650
- US-A1- 2002 020 239

## Description

### TECHNICAL FIELD

The present invention relates to a motor with a reduction gear in which an output plate to which an output shaft of a reducer section is fixed is composed of a metal plate and a resin portion integrally insert-molded to cover the metal plate.

### BACKGROUND ART

A motor with a reduction gear is an assembly of a motor section and a reducer section. The reducer section is configured such that a worm connected to a rotating shaft, a worm wheel meshed with the worm, and other components are accommodated in a gear box. When the motor of the motor section is driven, the rotating shaft rotates. The rotation of the rotating shaft rotates the worm wheel via the worm at a reduced speed. The rotation of the worm wheel rotates an output plate via a buffer member and then rotates an output shaft fixed to the output plate.

Conventionally, such an output plate is formed from a metal plate by means of stamping, and hollow cylindrical columns, serving as buffer member compression portions, are formed thereon by means of burring. However, since the entire output plate is formed of metal, the output plate is heavy and cannot be reduced in weight.

Further, in a known technique, a steel plate portion and a resin portion are manufactured as separate parts and are combined for use (refer to Patent Document 1). FIG. 7 is a view showing an output plate disclosed in Patent Document 1. The illustrated output plate is composed of an outer hub formed of resin and a plate-like inner hub formed of metal. An inner hub engagement recess is formed on the top surface of the outer hub. The inner hub is placed in the inner hub engagement recess, whereby the inner hub is coupled with the outer hub in the rotational direction.thereof. An output shaft coupling portion is formed in a central portion of the inner hub by means of knurling. However, such a combined output plate generates backlashes in the circumferential direction due to clearances formed between the combined outer and inner hubs. Such backlashes cause generation of noise when the rotational direction of the motor is reversed. Further, since the resin portion (out hub) must be thick, the output plate cannot be rendered compact.

Moreover, an output plate can be formed by use of a metal piece which has a tooth portion along the peripheral portion thereof and which is covered with resin through insert molding. However, in the case of such an insert-molded output plate, the insert metal piece has a large outer diameter, and the output plate inevitably becomes heavy, because the material of the metal piece is metal (steel plate.).
Patent Document 1: Japanese Patent Application Laid-Open (*kokai*) No. 2003-13989 (JP-A-2003013989).

### DISCLOSURE OF THE INVENTION

### PROBLEMS TO BE SOLVED BY THE INVENTION

An object of the present invention is to solve the above-mentioned problems, and to enable a reduction in the size of a metal plate which serves as an output shaft fixation metal piece to be combined with a resin portion formed through insert molding, to thereby reduce the weight and size of the entire output plate.

### MEANS FOR SOLVING THE PROBLEMS

The present invention provides a motor equipped with a reducer comprising a motor section and a reducer section assembled to the motor section as defined in claim 1.
Preferred embodiments thereof are defined in the dependent claims.

### EFFECT OF THE INVENTION

According to the present invention, the output shaft fixation metal piece combined with the resin portion formed through insert molding can be reduced in size, whereby the weight and size of the entire output plate can be reduced. The resin penetrating not only the serrations formed along the outer circumference of the output plate but also the plurality of rotation prevention holes prevents rotation in the circumferential direction. Further, the resin penetrating the rotation prevention holes can withstand a fore which acts on and raises the output plate when the buffer member is compressed.

By virtue of the above-described configuration, the outer diameter of the metal plate, serving as the output shaft fixation metal piece, can be rendered equal to or less than 2.5 times (2.0 to 2.5 times) the diameter of the output shaft. Therefore, according to the present invention, the weight of the output plate can be reduced to about 9 g, which is lighter than the weight (about 24 g) of a conventional product whose entirety is formed of a metal plate and the weight (about 15 g) of an insert-molded product in which rotation is prevented only at the outer circumference.

### BRIEF DESCRIPTION OF THE DRAWINGS

FIG. 1 is a longitudinal sectional view of a motor with a reduction gear configured in accordance with the present invention.
FIG. 2(A) is a sectional view showing an output shaft of a reducer section and its vicinity, and FIG. 2(B) is a view showing the output shaft.
FIG. 3 is a view showing a worm wheel composed of a helical gear.
FIG. 4 is a view showing a buffer member formed of, for example, buffer rubber.
FIG. 5 is a pair of views showing an output plate wherein (A) shows the front face side opposite the side where the buffer member is located, and (B) shows the back face side where the buffer member is located.
FIG. 6 is a set of views showing, in detail, a metal plate shown in FIG. 5, wherein (A) shows a front view, (B) shows a side view, and (C) shows a perspective view as viewed from the front side.

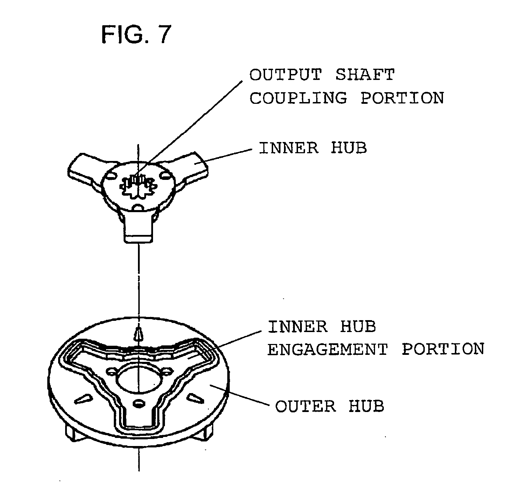

FIG. 7 is a view showing an output plate disclosed in Patent Document 1.

### BEST MODE FOR CARRYING OUT THE INVENTION

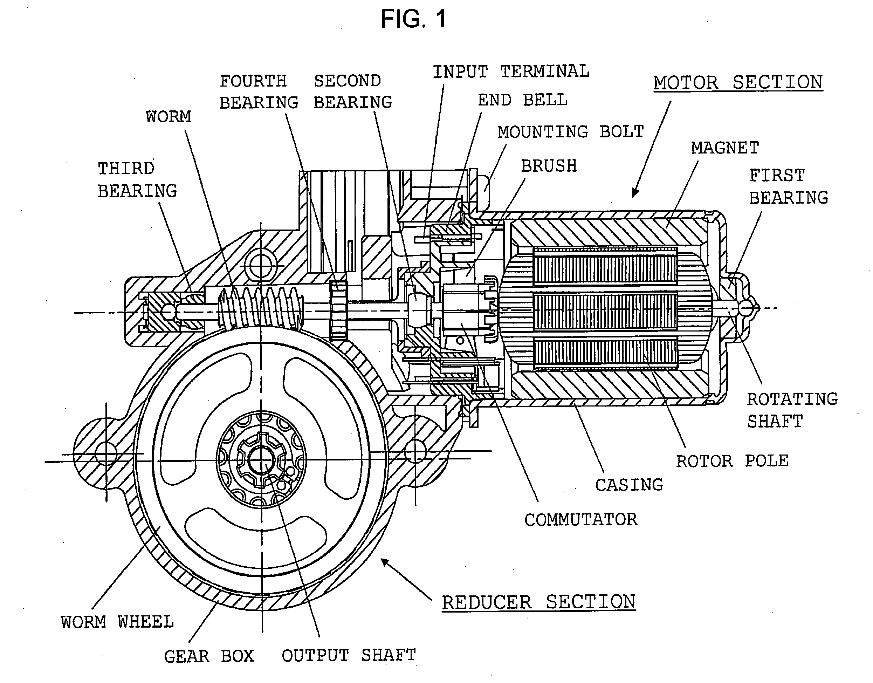

The present invention will next be described with reference to illustrations. FIG. 1 is a longitudinal sectional view of a motor with a reduction gear configured in accordance with the present invention. The motor with a reduction gear is an assembly of a motor section and a reducer section. The motor section is configured such that magnets are attached to the inner circumferential surface of a casing, which is formed of a metal material and assumes the form of a closed-bottomed tube. An end bell made of resin is fitted to an opening portion of the casing, thereby closing the opening portion. A commutator, and rotor poles composed of a laminated core and windings wound around the laminated core are mounted on a rotating shaft, thereby forming a motor rotor. A pair of input terminals are connected to a pair of brushes in contact with the commutator and project outward through the end bell from the motor section for electrical connection. One end of the rotating shaft is supported by a first bearing provided at the center of a bottom portion of the closed-bottomed tubular motor casing. The other end of the rotating shaft is supported by a second bearing housed in a central portion of the end bell. The rotating shaft extends further outward from the motor section into the reducer section.

The reducer section is attached to the motor section by means of mounting bolts. The reducer section is configured such that a gear box made of resin houses a worm fixed on the rotating shaft, a worm wheel composed of a helical gear and meshed with the worm, and other components. A projecting end of the rotating shaft is supported by a third bearing housed in the gear box. Further, a fourth bearing for supporting the rotating shaft is provided in the gear box. However, when the motor is of low-output type, the fourth bearing may be omitted. When the motor of the motor section is driven, the rotating shaft rotates. The rotation of the rotating shaft rotates the worm wheel via the worm at a reduced speed. The rotation of the worm wheel rotates an output shaft via a buffer member or the like. The rotation of the output shaft can, for example, open and close window glass of an automobile via an unillustrated drive means. The structures of the above-described motor section and reducer section may be the same as the conventional technique.

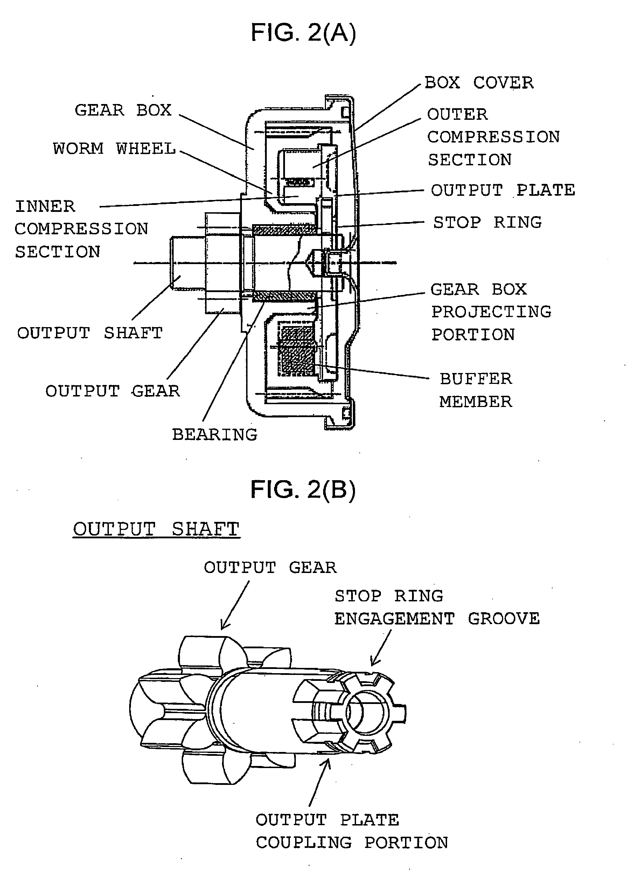

FIG. 2(A) is a sectional view showing the output shaft of the reducer section and its vicinity, and FIG. 2(B) is a view showing the output shaft. The worm wheel, the buffer member, and an output plate are disposed within the gear box. These members are fixed together in a manner to be described in detail later. The gear box formed of resin has a gear box projecting portion integrally formed at the center thereof. A bearing provided on the inner circumference of the gear box projecting portion rotatably supports the output shaft. A metal plate of the output plate is fixed to an output plate coupling portion formed at a distal end portion of the output shaft. That is, this output plate coupling portion has a shape for meshing engagement with a spline shaped portion of the metal plate to be described later, and forms means for preventing rotation in the circumferential direction. An output gear which is to be connected to an external drive mechanism is mounted to a proximal end portion of the output shaft projecting from the gear box. Thus, rotation of the worm wheel rotates the output plate connected to the worm wheel via the buffer member, and then rotates the output shaft fixed to the output plate.

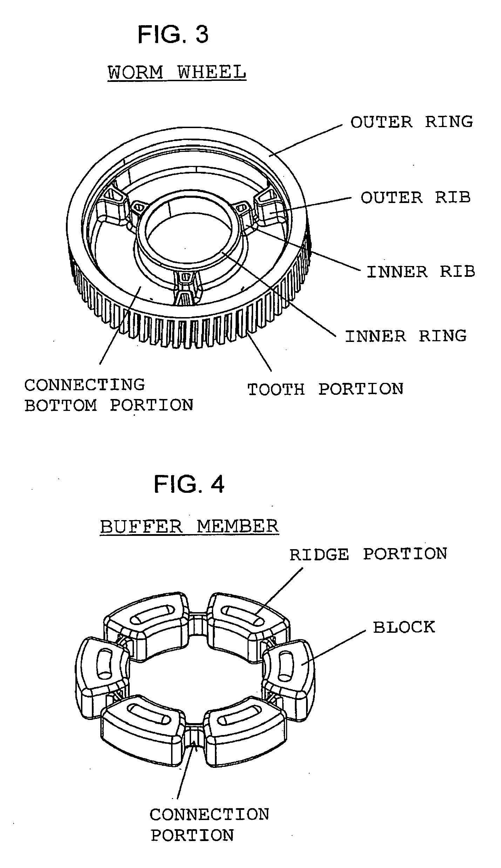

FIG. 3 is a view showing the worm wheel composed of a helical gear. The worm wheel integrally molded from resin includes an outer ring; an inner ring; a disk-like connecting bottom portion connecting the outer and inner rings; and a plurality of (three in the illustrated example) ribs provided at constant intervals. The buffer member is inserted into spaces between the ribs. Since the worm wheel to be combined with the metal worm is formed of resin, the weight and noise can be reduced. Each of the three ribs is divided at a division point near the radially central position; i.e., each rib is composed of an inner rib and an outer rib. Each of connection portions (see FIG. 4) of the buffer member is accommodated in a space between an outer rib and a corresponding inner rib. A tooth portion is provided along the outer circumference of the outer ring. The tooth portion is engaged with the worm fixed to the motor shaft. The inner circumference of the inner ring is engaged with the gear box projecting portion as shown in FIG. 2(A).

The inner ribs are integrally connected to the outer circumference of the inner ring and the connecting bottom portion, and the out ribs are integrally connected to the inner circumference of the outer ring and the connecting bottom portion. Each of the inner ribs and the outer ribs is tapered toward the division point near the center. Therefore, the width of each rib becomes narrowest at the end located toward the division point. Further, these ribs are tapered such that their widths decrease in the axial direction from the disk-like connecting bottom portion side toward their distal ends (rightward in FIG. 2(A).

FIG. 4 is a view showing the buffer member formed of, for example, buffer rubber. The buffer member is divided into a plurality of (six in the illustrated example) arcuate blocks having the same shape. These blocks are connected together via connection portions located near the center in the radial direction, so that the buffer member assumes an annular shape as a whole. Since the blocks are integrally connected, their assembly can be facilitated. Further, projecting ridge portions are formed on upper and lower surfaces of each of the blocks so as to stabilize contact positions at the time of compression and render the moments generated in the blocks uniform to a possible extent. The three ribs of the worm wheel and the three buffer member compression portions of the output plate are alternately disposed in the spaces between the blocks.

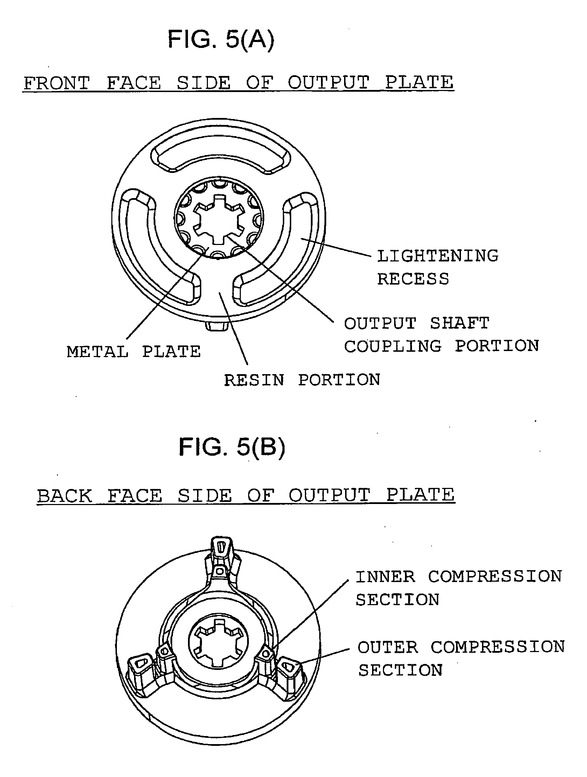

FIG. 5 is a pair of views showing the output plate wherein (A) shows the front face side opposite the side where the buffer member is located, and (B) shows the back face side where the buffer member is located. The illustrated output plate, which has a circular shape as a whole, is formed through insert molding performed in such a manner that a resin portion (formed of, for example, glass-filled nylon) fixes a center metal plate (formed of, for example, steel plate). The metal plate has, at the center thereof, an output shaft coupling portion to which the output shaft is fixed after being positioned. Three lightening recesses are provided on the resin surface so as to reduce the weight of the output plate.

The plurality of (three in the illustrated example) buffer member compression portions provided at constant intervals on the back face side are integrally formed on a disk-like portion during the insert molding. Each of the buffer member compression portions is divided at a division point near the radially central position; i.e., each compression portion is composed of an inner compression section and an outer compression section. In the illustrated example, three buffer member compression portions, each divided into inner and outer sections, are provided. However, four or more buffer member compression portions may be provided, and the buffer member compression portions are not necessarily required to be divided into inner and outer sections. Each of the inner compression sections and the outer compression sections is tapered toward the division point near the center. Therefore, the width of each compression section becomes narrowest at the end located toward the division point. Further, these compression sections are tapered such that their widths decrease in the axial direction from the disk-like portion toward their distal ends (toward the buffer member side).

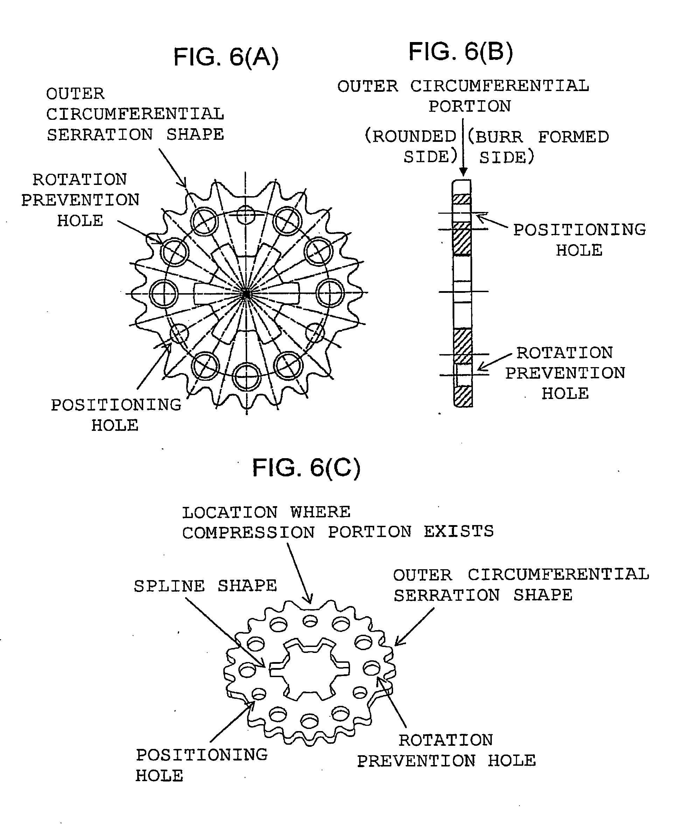

FIG. 6 is a set of views showing the metal plate shown in FIG. 5, wherein (A) shows a front view, (B) shows a side view, and (C) shows a perspective view as viewed from the front side. The illustrated metal plate, which has a disk-like shape as s whole, has a spline shaped portion which is formed along the inner circumference thereof and serves as an output shaft coupling portion with which the output shaft is engaged. The metal plate also has serrations (wavy teeth) formed along the outer circumference thereof. The spline shaped portion provided for torque transmission is not limited to the illustrated grooves formed at rectangular recess portions (in the illustrated example, the angle pitch: 60 degrees), and may be serrations. Further, in order to improve adhesion of the resin to the metal plate, fine projections and depressions may be formed on the surface of the metal plate (so called dotting). Desirably, the outermost diameter of the metal plate is set to fall within a range of 2 to 2.5 times, inclusive, the diameter of the output shaft so as to maintain the output shaft fixation strength while reducing the weight of the metal plate.

In the illustrated metal plate has a plurality of (three in the illustrated example) positioning holes provided at constant intervals along a circle in an intermediate portion between the outer and inner circumferences thereof. Pins projecting from a mold are inserted into these positioning holes. Further, a plurality of rotation prevention holes are provided between the positioning holes at constant intervals. In the illustrated examples, three rotation prevention holes are provided between two positioning holes at an angle pitch of 30 degrees, so that nine rotation prevention holes are provided in total. The radially extending center lines of the rotation prevention holes coincide with the radially extending center lines of the serration teeth (crest portions of the wavy tooth portions). The rotation prevention holes are not provided at locations which coincide with center lines of the inner compression sections (see FIG. 5). Instead, the positioning holes for the mode used for integral molding are provided at these locations.

The outer side serrations are formed at a constant pitch (15° pitch in the illustrated example) such that tooth portions which project radially outward are formed at least at positions located radially outward of the rotation prevention holes. The crests of the tooth portions and the bottoms of the notch portions are rounded. The angle pitch (30° in the illustrated example) of the rotation prevention holes is two times that of the serrations. The tooth portions (serration teeth) located radially outward of the positioning holes are removed so that arcuate cutouts are formed. An imaginary circle connecting the bottoms of the arcuate cutouts has a diameter equal to or less than the diameter of a root circle of the serrations (an imaginary circle whose radius is equal to the distance between the center of the metal plate and the bottom of the notch). This design is employed for the following reason. Since the inner compression sections are located outward of the bottoms of the cutouts, the distance between the inner compression sections and the meal plate is increased to a possible extent so as to prevent concentration of stress acting on the joint surface between the resin portion and the metal plat during compression of the blocks, to thereby prevent breakage of the resin. For the same reason, the positioning holes are arranged along a circle which is smaller in diameter than a circle along which the rotation prevention holes are arranged, in order to shift the positioning holes radially inward to a possible extent.

The metal plate configured as described above is integrated with resin through insert molding. At that time, as shown in FIG. 5, the molding is performed such that the resin covers the metal plate from the opposite sides, excluding an inner circumferential portion of the metal plate. As shown in FIG. 2(A), a stop ring (C-shaped retaining ring) is located on the inner circumferential portion of the front face (see FIG. 5(A)) of the output plate. Therefore, a portion of the front face located radially outward of the stop ring is covered with the resin. The back face (see FIG. 5(B)) of the output plate is covered with the resin, excluding at least the output shaft coupling portion.

The metal plate is disposed in such a manner that one face (see FIG. 6(B) of the metal plate whose outer circumferential portion is rounded when the metal plate is stamped is located on one side of the output plate where the compression portions are formed, and the other face of the metal plate whose outer circumferential portion has burrs is located on the other side of the output plate where the compression portions are not formed. On the rounded side, the corner portions are inevitably formed to have an arcuate shape (rounded surface), whereby stress concentration can be avoided. The rounded shapes formed in a manufacturing process can be used as they are. However, a rounding process (cured-surface-forming process) may be performed. At that time, desirably, each rounded corner has a radius of 0.4 to 0.6 mm. Further, in the case where the rounding process is performed for the opposite faces of the metal plate, at the time of insert molding, the metal plate can used without consideration of its orientation; i.e., irrespective of whether the front face or the back face faces upward. In this manner, the output plate having been described with reference to FIG. 5 can be fabricated. In the output plate, the resin penetrating not only the serrations (tooth portions) formed along the outer circumference but also the plurality of rotation prevention holes functions to prevent rotation in the circumferential direction. Further, the resin penetrating the rotation prevention holes can withstand a force which acts on and raises the output plate when the buffer member is compressed. This structure enables transmission of a torque of 10 N·m (upper limit: 13 N·m) in the circumferential direction.

The reducer section is assembled as follows. The worm wheel, the buffering member, and the output plate are disposed in the gear case. After the output shaft is inserted from the gear case side, the output plate is pressed toward the gear case side such that the output shaft is coupled with the output plate coupling potion. In this state, the stop ring is engaged with a stop ring engagement groove (see FIG. 2(B)) at the distal end of the output shaft, whereby the output plate is fixed to the output shaft.

### Example

Example dimensions of the output shaft and the metal plate are as follows. The output shaft outer diameter (A): φ11.0 mm; the metal plate outer diameter (B): φ24.92 mm; and the metal plate outer diameter (B)/the output shaft outer diameter (A) = 24.92/11.0 ≅ 2.27 times.

When the metal plate is formed from a cold-rolled steel plate SPCC, the thickness t of the metal plate is 2.0 mm. When the metal plate is formed from a hardened steel plate having an increased hardness, the thickness of the metal plate can be halved (t = 1.0 mm). Further, when the metal plate is formed of an aluminum alloy so as to further reduce the weight, the plate thickness becomes 1.5 times (t = 3.0 mm). The diameter of the rotation prevention holes is set to φ2.5 mm (approximately equal to the thickness t of the metal plate (0.9t to 1.1t), and the diameter of the positioning holes is set to φ2.0 mm.

## Claims

1. A motor equipped with a reducer comprising a motor section and a reducer section assembled to the motor section wherein a projecting end of a rotating shaft extending from the motor section is rotatably supported by a bearing provided within a reducer section, and the reducer section has a gear box, a worm mounted on the extending rotating shaft accommodated in the gear box, a worm wheel meshed with the worm, an output plate fixed to the worm wheel via a buffer member, and an output shaft which is fixed to a central portion of the output plate and is rotatable together with the worm wheel, the motor **characterized in that**:
the output plate is composed of a metal plate and a resin portion formed through insert molding to be integrated with the metal plate excluding an inner circumferential portion thereof;
the resin portion has a plurality of buffer member compression portions integrally formed on a back face of a disk-like portion thereof where the buffer member is located; and
the metal plate assumes the form of a disk as a whole, and includes an output shaft coupling portion which is formed at the center thereof and to which the output shaft is fixed after being positioned, serrations provided along the outer circumference of the metal plate, and a plurality of rotation prevention holes circumferentially arranged in an intermediate portion between the outer and inner circumferences of the metal plate.

2. A motor equipped with a reducer according to claim 1, wherein the metal plate includes a plurality of positioning holes for a mold which is used for integral molding, the positioning holes being arranged along a circle which is smaller in diameter than a circle along which the rotation prevention holes are arranged.

3. A motor equipped with a reducer according to claim 2, wherein the rotation prevention holes are formed at constant intervals between the positioning holes such that radially extending center lines of the rotation prevention holes coincide with radially extending center lines of serration teeth formed along the outer circumference; and the rotation prevention holes are not provided at locations which coincide with center lines of the buffer member compression portions, and, instead, the positioning holes are provided at these locations.

4. A motor equipped with a reducer according to claim 3, wherein serration teeth located radially outward of the positioning holes are removed so that arcuate cutouts are formed, and, in order to position the buffer member compression portions at positions corresponding to the arcuate cutouts, an imaginary circle connecting the bottoms of the arcuate cutouts has a diameter smaller than a diameter of a root circle of the serrations formed along the outer circumference.

5. A motor equipped with a reducer according to claim 1, wherein the metal plate has an outer diameter 2.0 to 2.5 times an outer diameter of the output shaft.

6. A motor equipped with a reducer according to claim 1, wherein the metal plate is disposed in such a manner that one face of the metal plate whose outer circumferential portion is rounded when the metal plate is stamped is located on one side of the output plate where the buffer member compression portions are formed, and the other face of the metal plate whose outer circumferential portion has burrs is located on the other side of the output plate where the buffer member compression portions are not formed.

## Patentansprüche

1. Ein Motor ausgestattet mit einem Reduzierer umfassend einen Motorbereich und einen Reduziererbereich, der mit dem Motorbereich zusammengebaut ist, wobei ein hervorstehendes Ende einer rotierenden Welle sich vom Motorbereich wegerstreckt, um drehbar durch ein Lager unterstützt zu werden, das innerhalb eines Reduziererbereiches bereitgestellt wird, und der Reduziererbereich weist ein Getriebe auf, eine Schnecke, die auf der hervorstehende rotierende Welle befestigt ist, die im Getriebe aufgenommen ist, ein Schneckenrad, das in die Schnecke greift, eine Ausgabeplatte, die auf dem Schneckenrad über ein Pufferelement fixiert ist, und eine Ausgabewelle, die an einem zentralen Bereich der Ausgabeplatte befestigt ist und rotierbar zusammen mit dem Schneckenrad ist, der Motor ist **dadurch** charakterisiert, dass:
die Ausgabeplatte zusammengesetzt ist aus einer Metallplatte und einem Harzbereich, der ausgebildet ist durch eine Inserttechnik, um integriert zu werden mit der Metallplatte, ausgenommen einen inneren umlaufenden Bereich davon;
der Harzbereich hat eine Vielzahl von Pufferelementkompressionsbereichen, die integral ausgebildet sind auf einer Rückseite eines plattenähnlichen Bereiches davon, wo die Pufferelemente angeordnet sind; und
die Metallplatte nimmt die Form einer Platte als Ganzes ein, und umfasst einen Ausgabewellenkupplungsbereich, der im Zentrum davon ausgebildet ist, und mit dem die Ausgabewelle befestigt ist nachdem sie positioniert wurden, Einkerbungen werden entlang des äußeren umlaufenden Bereiches der Metallplatte bereitgestellt, und eine Vielzahl von Rotationsverhinderungsbohrungen sind umlaufend angeordnet in einem Zwischenbereich zwischen dem äußeren und dem inneren Umfang der Metallplatte.

2. Ein Motor ausgestattet mit einem Reduzierer gemäß Anspruch 1, wobei die Metallplatte eine Vielzahl von Positionierungsbohrungen für eine Form umfasst, die verwendet wird für die Inserttechnik, die Positionierungslöcher sind angeordnet entlang eines Kreises der kleiner ist im Durchmesser als der Kreis entlang der die Rotationsverhinderungsbohrungen angeordnet sind.

3. Ein Motor ausgestattet mit einem Reduzierer gemäß Anspruch 2, wobei die Rotationsverhinderungsbohrung in einem Konstanten Abstand zwischen den Positionierungsbohrungen angeordnet sind, so dass die radial erstreckenden Zentrumslinien der Rotationsverhinderungsbohrung übereinstimmt mit den Radial erstreckenden Zentrumslinien der Einkerbungszähne, die entlang des äußeren Umfangs angeordnet sind; und die Rotationsverhinderungsbohrung sind nicht bereitgestellt in Bereichen, die übereinstimmen mit den Zentrumslinien der Pufferelementkompressionsbereiche, und anstatt dieser sind die Positionsbohrungen an diesen Orten angeordnet.

4. Ein Motor ausgestattet mit einem Reduzierer gemäß Anspruch 3, wobei die Verzahnungszähne, die radial nach außen von den Positionierungsbohrungen angeordnet sind, entfernt werden, so dass akkurate Ausschnitte genormt werden können, und, um die Pufferelementkompressionsbereiche an den Positionen korrespondierend zu den akkuraten Ausschnitten zu positionieren, weist ein imaginärer Kreis der den Bodenbereich der akkuraten Ausschnitte verbindet einen Durchmesser auf, der geringer ist als ein Durchmesser eines Wurzelkreises der Verzahnungszähne die entlang des äußeren Umlaufs ausgebildet sind.

5. Ein Motor ausgestattet mit einem Reduzierer gemäß Anspruch 1, wobei die Metallplatte einen äußeren Durchmesser aufweist der das 2,0 bis 2,5-fache eines äußeren Durchmessers einer Ausgabewelle aufweist.

6. Ein Motor ausgebildet mit einem Reduzierer gemäß Anspruch 1, wobei die Metallplatte in einer solchen Weise ausgebildet ist, dass eine Seite der Metallplatte deren äußerer umlaufender Bereich abgerundet ist, wenn die Metallplatte gestanzt wird, an einer Seite der Ausgabeplatte angeordnet ist an der die Pufferelementkompressionsbereiche ausgebildet sind, und die andere Seite der Metallplatte, deren andere umlaufenden Bereiche Grade aufweist, ist an der andere Seiten der Ausgabeplatte angeordnet, bei dem die Pufferelementekompressionsbereiche nicht ausgebildet sind.

## Revendications

1. Un moteur équipé d'un réducteur comportant une section motrice et une section réductrice assemblées à la section motrice, dans lequel une extrémité en saillie d'un arbre de rotation s'étendant de la section motrice est soutenue en rotation par un support équippé d' une section réductrice, la section réductrice disposant d'une boîte de vitesses, une vis sans fin montée sur l'arbre en rotation disposé dans la boîte de vitesses, un engrenage de la vis sans fin en prise avec la vis sans fin, une plaque de sortie fixée à l'engrenage de la vis sans fin au moyen d'un élément tampon, et un arbre de sortie fixé à une partie centrale de la plaque de sortie et solidaire en rotation avec l'engrenage de la vis sans fin, le moteur étant **caractérisé en ce que** :
la plaque de sortie est composée d' une plaque métallique et d' une partie en résine formée par moulage introductif afin d' être intégrée à la plaque métallique à l'exclusion d'une partie circonférentielle intérieure;
la partie en résine dispose d'une pluralité de parties de compression d'éléments tampons intégralement formées sur une face arrière d'une portion en forme de disque dans laquelle se trouve l'élément tampon; et
la plaque métallique présente la forme d'un disque complet, et inclut une partie de couplage de l'arbre de sortie formée en son centre et auquel l'arbre de sortie est fixé après son positionnement, des dentelures disposées le long de la circonférence externe de la plaque métallique, et une pluralité d'orifices pour empêcher la rotation disposés de manière circonférentielle sur une partie intermédiaire entre les circonférences externes et intérieures de la plaque métallique.

2. Un moteur équipé d'un réducteur selon la revendication 1, dans lequel la plaque métallique comporte une pluralité des trous de positionnement pour un moule utilisé pour la moulage intégral, les trous de positionnement étant disposés le long d'un cercle ayant un diamètre plus petit que le cercle le long duquel sont disposés les orifices destinés à empêcher la rotation.

3. Un moteur équipé d'un réducteur selon la revendication 2, dans lequel les orifices destinés à empêcher la rotation sont disposés à intervalles constants entre les trous de positionnement de telle manière que des lignes centrales en extension radiale des orifices destinés à empêcher la rotation coïncident avec les lignes centrales en extension radiale des dents de dentelure formées le long de la circonférence externe; et les orifices destinés à empêcher la rotation ne sont pas disposés aux emplacements coïncidant avec les lignes centrales des parties de compression de l'élément tampon, et, au contraire, les trous de positionnement y étant placés..

4. Un moteur équipé d'un réducteur selon la revendication 3, dans lequel des dents de dentelure disposées de manière radiale à l'extérieur des trous de positionnement sont enlevés de manière à former des découpes arquées et, afin de placer les éléments de compression de l'élément tampon aux positions correspondant aux découpes arquées, un cercle théorique reliant les fonds des découpes arquées présente un diamètre inférieur au diamètre d'un cercle de base des dentelures formées le long de la circonférence externe.

5. Un moteur équipé d'un réducteur selon la revendication 1, dans lequel la plaque métallique présente un diamètre extérieur 2.0 à 2.5 fois le diamètre extérieur de l'arbre de sortie.

6. Un moteur équipé d'un réducteur selon la revendication 1, dans lequel la plaque métallique est disposée de façon qu'une face de la plaque métallique dont la partie circonférentielle externe est arrondie lorsque la plaque métallique est frappée est située sur un côté de la plaque de sortie où les parties de compression de l'élément tampon sont formées, et l'autre face de la plaque métallique dont la partie circonférentielle externe présente des bavures se trouve située de l'autre côté de la plaque de sortie où les parties de compression de l'élément tampon ne sont pas formées.
